# EUROPÄISCHE PATENTSCHRIFT

(11) **EP 4 567 192 B1**
(45) Veröffentlichungstag und Bekanntmachung des Hinweises auf die Patenterteilung: **12.08.2026**
(21) Anmeldenummer: 24000130.5
(22) Anmeldetag: 08.11.2024
(51) Int. Cl.: E01C 23/09, E02F 5/12, H02G 9/02, H02G 1/06

(54) **FRÄSFUGENBEHANDLUNGSVORRICHTUNG**
MILLING-JOINT TREATMENT DEVICE
DISPOSITIF DE TRAITEMENT DE JOINTS DE FRAISAGE

(30) Priorität: 07.12.2023 DE 102023005056; 07.12.2023 DE 202023002555 U
(43) Veröffentlichungstag der Anmeldung: 11.06.2025
(73) Patentinhaber: H & E Bohrtechnik GmbH, 07646 Stadtroda (DE)
(72) Erfinder: Heidler, Thomas, 07646 Stadtroda (DE)
(74) Vertreter: Weihrauch, Frank

(56) Entgegenhaltungen:
- EP-A1- 2 246 485
- AT-B1- 509 086
- DE-U1- 8 617 142
- US-B1- 11 466 428
- US-B1- 6 371 691

## Beschreibung

Die Erfindung betrifft eine Vorrichtung zur Behandlung von Fräsfugen, insbesondere zum Verschließen von Fugen in Straßenoberflächen oder Landebahnoberflächen, die insbesondere für Induktionsschleifen für Verkehrsdatenerfassungen und für Lichtsignalanlagen auf Straßen beziehungsweise für die Erfassung der Belegung der Landebahn eingebracht wurden.

Der Stand der Technik beschreibt das Verschließen von derartigen Fräsfugen vorwiegend als manuelles Verfahren.

Nach dem Fugenschnitt werden die Fugen optional per Hand mit Druckluft freigeblasen. Nach dem Verlegen der Kabel werden in die Fuge, auf das eingelegte Kabel, zu dessen Lagesicherung punktuelle Fixierungen beispielsweise durch Holzkeile eingebracht und gegebenenfalls mit einem Handwerkzeug eingestampft. Anschließend wird die Fuge bis zur Unterkante der tragenden Belagschicht mit Sand verfüllt, der hier eingekehrt oder mit einer Kelle oder kleinen Schaufel eingebracht und dabei entsprechend der geforderten Füllhöhe manuell nivelliert wird. Zur Vorbereitung des Wiederverschlusses der Fuge werden die Seitenflanken mit einem Haftvermittler oder Kleber eingepinselt. Danach wird die Fuge in der Regel mit einer bituminösen Füllung vergossen. Somit wird eine Abdichtung gegen Umwelteinflüsse erreicht und die mechanische Tragfähigkeit wiederhergestellt. Nachteilig an diesem Vorgehen ist der hohe Grad an manuellen Schritten, die nacheinander in überwiegend kniender Körperhaltung durchgeführt werden müssen. Dementsprechend lange dauert der Vorgang. Nachteilig ist auch die stark schwankende Qualität aufgrund schwankender Füllhöhen des Sandeintrags und unzureichender Haftung an den Fugenflanken durch deren Verschmutzung. Nachteilig ist neben dem hohen zeitlichen und personellen Aufwand auch die Gesundheitsbelastung durch die kniende Körperhaltung.

DE 86 17 142 U1 betrifft eine Vorrichtung zum Verfüllen und Schließen schmaler, kanalförmiger Gräben zur Aufnahme von Rohr- oder Kabelleitungen, aufweisend ein fahrbares Rahmengestell mit einem Behälter für Verfüllgut mit einstellbarer Austragöffnung, einer nachgeführten Verdichtungsrolle sowie einer Austragdüse für spritzfähiges Deckschichtmaterial aus einem mitgeführten Vorratsbehälter. Eine Fixierungseinheit zum Einpressen von Fixierkörpern zum Fixieren der Rohr- oder Kabelleitungen ist nicht offenbart.

Die Aufgabe der Erfindung ist es, eine Vorrichtung für die Durchführung der Arbeiten zur Behandlung von Fräsfugen für deren Wiederverschluss bereitzustellen, die eine hohe Qualität sowie einen reduzierten Personaleinsatz und Zeitaufwand ermöglicht.

Die Aufgabe wird durch eine Fräsfugenbehandlungsvorrichtung mit den im Patentanspruch 1 aufgeführten Merkmalen gelöst. Bevorzugte Weiterbildungen ergeben sich aus den Unteransprüchen.

Die Fräsfugenbehandlungsvorrichtung, die zum Verschließen von Fräsfugen in Straßenbelägen dient, weist als Grundkomponenten eine handgeführte verfahrbare Basisplattform, eine Fixierungseinheit, eine Absandungseinheit und eine Flankensprüheinheit auf.

Die Basisplattform als eine Grundkomponente weist eine Fahreinheit und ein Grundgestell auf. Das Grundgestell bildet die strukturelle Basis, auf der alle weiteren Komponenten angeordnet werden. Diese ist zumeist als Stahlrohrrahmen ausgelegt und bietet auseichend Stabilität, um alle Komponenten während des Arbeitsvorganges an ihrer Position zu halten. Auch die Fahreinheit ist am Grundgestell befestigt und verfügt vorzugsweise über mindestens drei Räder und eine Griff- bzw. Haltevorrichtung, damit die Fräsfugenbehandlungsvorrichtung durch einen Bediener geschoben oder geführt werden kann.

Ferner kann hier auch ein Hilfsantrieb vorhanden sein, der eine Fahrunterstützung bietet und den erforderlichen Kraftaufwand für das Bedienpersonal reduziert. Die Basisplattform kann optional auch als eine selbstfahrende Einheit ausgebildet sein, die beispielsweise über eine drahtlose Steuerung bedienbar sein kann.

Die Fixierungseinheit als weitere Grundkomponente dient zum Fixieren einer Leitung, beispielsweise einer Induktionsleitung, in einer Fräsfuge.

Dazu weist diese einen Fixierkörperbehälter auf, der dazu ausgebildet ist Fixierkörper aufzunehmen. Bei den Fixierkörpern kann es sich vorzugsweise um kleine Moosgummikörper handeln.

Bestandteil der Fixierungseinheit ist ein Fixierkörperhandlingsmodul, das zum Einpressen der Fixierkörper in die Fräsfuge ausgebildet ist.

Mit der Fixierungseinheit wird bei bestimmungsgemäßer Verwendung der erste Arbeitsschritt ausgeführt. Hierfür schiebt das Fixierkörperhandlingsmodul, das als Stopfgerät für die Fixierkörper ausgebildet ist, die Fixierkörper in die Fräsfuge, die sich dort gegen die Fräsfugenwandung elastisch verklemmen und so ein Auffedern der verlegten Leitung an der jeweiligen Stelle verhindern. Hierfür kann das Fixierkörperhandlungsmodul beispielsweise mit einem Linearzylinder, der hydraulisch, pneumatisch oder elektrisch angetrieben ist, aufgebaut sei. Dieser vollzieht die Stopfbewegung. Um die Fixierkörper aus dem Fixierkörperbehälter, der den Fixierkörpervorrat bereitstellt, in die Fräsfuge zu führen, sind weitere Führungselemente verbaut. Diese sind entweder als passive Rutschelemente oder auch als angetriebene Förderelemente ausgelegt. Das Stopfen der vorzugsweise flexiblen gummiartigen Fixierkörper in die Fräsfuge, bewirkt, dass die Induktions- oder Signalleitung in der Fräsfuge am Grund fixiert wird und eine ausreichende Lagefestlegung auch bei der nachfolgenden Einfüllung des Sandes erreicht wird. Der von der Fixierungseinheit ausgeführte Arbeitsschritt wird nachfolgend auch als das Fixieren bezeichnet.

Die Absandungseinheit ist zum Erzeugen eines Sandbettes in der Fräsfuge ausgebildet, dass die fixierte Leitung überdeckt. Diese stellt daher das zweite Arbeitselement der Fräsfugenbehandlungsvorrichtung dar. Das Sandbett dient zur Lagesicherung der eingebrachten Leitung, zu deren mechanischen Schutz sowie zum Auffüllen der Fräsfuge, angepasst an die Frästiefe hin zur Unterseite der Belagschichten, so dass bis zur Straßenoberfläche eine festlegbare Aufbauhöhe für den zuletzt vorzunehmenden - vorzugsweise bituminösen - Fugenverschluss bereitgestellt wird. Der von der Absandungseinheit bestimmungsgemäß ausgeführte Arbeitsschritt wird nachfolgend auch als das Absanden bezeichnet.

Hierfür weist die Absandungseinheit einen Sandvorratsbehälter auf, der zur Aufnahme eines Sandes ausgebildet ist. Weiterhin weist die Absandungseinheit eine Ausgabe- und Dosiereinheit auf. Der Sandvorratsbehälter ist von außen gut zugänglich ausgebildet und mit einer Einfülleinheit ausgestattet, die es ermöglicht den Sandvorrat auf verschiedene Weise, beispielsweise als loses Schüttgut, Sackware oder Ähnliches, nachzufüllen.

Die Absandungseinheit dient zum höhengerechten Einbringen des Sandes in die Fräsfuge. Dazu ist die Ausgabeeinheit in der Ausbringungshöhe zur Straßenoberfläche und zur Ausbringungsbreite vorzugsweise einstellbar gestaltet. Die Ausbringungshöhe lässt sich zudem vorzugsweise selbstregelnd anpassen, wodurch ein Ausgleich von Unebenheiten der Straßenoberfläche und unterschiedlichen Fräsfugentiefen erfolgt. Hierfür wird die Fräsfuge während der Fahrbewegung der Fräsfugenbehandlungsvorrichtung gefüllt und die Einbringungsmenge durch die Dosiereinheit geregelt. Vorteilhaft kann die Absandungseinheit mit einem Vibrationsrüttelsystem ausgestattet sein, dass ein permanentes und dosiertes Nachrutschen des Sandes aus dem Sandvorratsbehälter gewährleistet. Vorzugsweise ist die Absandungseinheit so aufgebaut, das der Sand ohne Berührung der Fräsfugenflanken tief in die Fräsfuge eingeleitet wird.

Die Flankensprüheinheit ist zu einer Benetzung einer Fugenflanke der Fräsfuge mit einer Haftkleberschicht ausgebildet. Der Haftkleber benetzt beide Flanken der Fräsfuge im oberen vertikalen Abschnitt der Fuge bis hin zum Übergang zur Straßenoberfläche. Hierfür ist weiter ein Haftklebervorratsbehälter vorhanden, der zur Aufnahme eines Haftklebers ausgebildet ist und eine Sprühdüse aufweist. Diese ist zum Aufsprühen des Haftklebers auf die beiden Fugenflanke vorzugsweise mit zwei Düsenauslässen oder zwei Düsenköpfen ausgebildet. Auch die Sprühdüse ist flexibel gestaltet, um sich in der Sprühhöhe und -breite der Fräsfuge anzupassen. Die Aufhängung der Sprühdüse kann sich ebenso dynamisch während des Fahrvorgangs an die Straßenoberfläche anpassen. Dadurch ist ein sicherer und verlustfreier Auftrag des Haftklebers im oberen Bereich der Fräsfuge gewährleistet. Der von der Flankensprüheinheit ausgeführte Arbeitsschritt wird nachfolgend auch als der Haftmittelauftrag bezeichnet.

Alle oben beschriebenen Einheiten können durch ein intelligentes Sensor- und Steuerungssystem ergänzt werden, dass die Einheiten miteinander vernetzt, so dass die jeweiligen Arbeitsschritte der Einheiten bei nur einer Fahrt sequentiell ausgeführt werden. Der Bediener kann so die Fräsfugenbehandlungsvorrichtung an einer zentralen Steuereinheit, die ein Bedienfeld zur Verfügung stellt, steuern. So können die Parameter, wie beispielsweise Fixierkörperabstände in der Fuge und deren Einbringtiefe, Sandmenge, Fahrgeschwindigkeit, Haftkleberauftragsmenge und ähnliche Parameter, zentral gesteuert und aufeinander abgestimmt werden.

Die Fräsfugenbehandlungsvorrichtung stellt somit vorteilhaft ein personal- und damit kostensparendes Mittel für die Vorbereitung von Fräsfugen für das Wiederverschließen bereit.

Ein besonders wichtiger Vorteil ist, dass die aufgeführten Arbeitsschritte durch eine Vorrichtung ausgeführt werden können und diese durch lediglich einen Bediener bedient werden kann. Die Vorrichtung integriert somit die Mittel zur Durchführung der Arbeitsschritte Fixieren, Absanden und Haftmittelauftrag.

Vorteilhaft können mit nur einer Fahrt der erfindungsgemäßen Vorrichtung alle aufgeführten Arbeitsschritte ausgeführt werden. Ein weiterer wichtiger Vorteil ist die so erreichbare hohe und reproduzierbare Qualität der Fräsfugenvorbereitung.

Gemäß einer vorteilhaften Weiterbildung weist die Fräsfugenbehandlungsvorrichtung eine Abdeckbandeinheit auf.

Die Abdeckbandeinheit ist zum Auflegen eines Abdeckbandes ausgebildet, das die Fräsfuge überdeckt. Das Abdeckband verschließt die Fräsfuge nach der Ausführung der drei Arbeitsschritte Fixieren, Absanden und Haftmittelauftrag provisorisch. Damit wird das Eindringen von Schmutz und Fremdkörpern verhindert, so dass insbesondere das Haftvermögen der Fugenflanken bis zum Einbringen des Fräsfugenverschlussmittels, vorzugsweise Bitumen, erhalten bleibt.

Dazu weist die Abdeckbandeinheit einen Abdeckbandrollenaufnehmer und eine Abroll- und Bandauflegeeinheit auf, die zum Aufbringen des Abdeckbandes auf einen Fräsfugenrand ausgebildet ist. Diese ist zudem auch höhendynamisch am Grundgestell befestigt, um etwaige Fahrbahnunebenheiten beim Aufbringen des Abdeckbandes ausgleichen zu können. Des Weiteren kann auch die Auflegekraft des Bandes gesteuert werden, damit immer genügend Anpressdruck vorhanden ist, um das Abdeckband mit dem der Straßenoberfläche am Rand der Fräsfuge sicher zu verbinden. Das Abdeckband ist hierfür vorzugsweise selbstklebend ausgerüstet.

Nach einer nächsten vorteilhaften Weiterbildung der Fräsfugenbehandlungsvorrichtung weist die Fahreinheit einen Antrieb auf, der für eine aktive Fahrbewegung der Fräsfugenbehandlungsvorrichtung ausgebildet ist. Die Möglichkeit zur aktiven Fahrbewegung unterstützt den Bediener bei der Anwendung der Fräsfugenbehandlungsvorrichtung. Die Bedienkräfte beim Schieben der Fräsfugenbehandlungsvorrichtung werden reduziert und der Bediener entlastet, wodurch nicht nur das Arbeitsergebnis quantitativ gesteigert werden kann, sondern auch zugleich eine exakte Führung entlang der Fräsfuge erleichtert und somit die Qualität erhöht wird. Auch die durch einen steuerbaren Antrieb mögliche besonders konstante Geschwindigkeit beim Vorantreiben der Fräsfugenbehandlungsvorrichtung bietet für die Qualität der Fräsfugenverschließung, insbesondere beim Absanden und beim Haftmittelauftrag entsprechende Vorteile. So wird die Fuge beim Absanden gleichmäßig gefüllt und es werden Fehlstellen vermieden sowie ferner wird beim Haftmittelauftrag eine Haftmittelschicht ohne übermäßige Dicke einerseits oder Fehlstellen andererseits erreicht, was eine längere Haltbarkeit des späteren Fugenverschlusses gewährleistet.

Entsprechend einer weiteren vorteilhaften Weiterbildung der Fräsfugenbehandlungsvorrichtung weist die Fahreinheit einen Leitkörper auf.

Der Leitkörper greift in die Fräsfuge ein und ist dazu ausgebildet, die Basisplattform fugenverlauffolgend zu führen. Der Leitkörper ist in Fahrtrichtung vorzugsweise im vorderen Bereich angebracht, sodass die in der Anordnung an dem Grundkörper nachfolgenden Bearbeitungsmodule der vorgegebenen Spur folgen und somit präzise zu dem Verlauf der Fräsfuge positioniert werden.

Der Leitkörper kann beispielsweise als einfacher mechanischen Führungsdorn oder Führungsrolle ausgebildet sein und von oben in die Fräsfuge so hineinreichen, dass eine Führung durch die Fugenflanken erfolgt. Der Leitkörper kann auch als Sensor ausgebildet sein, der einer elektronisch unterstützten Lenkung zugeordnet ist, so dass die Fräsfugenbehandlungsvorrichtung entlang dem durch die Fräsfuge vorgegebenen Fahrweg geführt wird.

Die Führung der Fräsfugenbehandlungsvorrichtung in der Fräsfuge mittels des Leitkörpers erleichtert die präzise Führung durch den Bediener.

In einer anderen vorteilhaften Weiterbildung weist die Fräsfugenbehandlungsvorrichtung ein Fugenflankenreinigungsmodul auf.

Das Fugenflankenreinigungsmodul ist zu einer Reinigung der Fugenflanke vor der Benetzung der Fugenflanke mit der Haftkleberschicht ausgebildet. Die Behandlung der Fräsfugen erfolgt meist nicht unmittelbar nach dem Einfräsen. Vielmehr können häufig mehrere Tage bis Wochen dazwischen vergehen. Daher ist das vorhergehende Reinigen der Fuge für eine Verbesserung der Qualität des Haftverhaltens des Haftklebers sehr vorteilhaft. Das Fugenflankenreinigungsmodul ist meist als einfache Luftausblasdüse ausgebildet, kann aber auch mit mechanischen Reinigungselementen, wie beispielsweise Bürsten oder Abstreifer und Ähnlichem ausgerüstet sein.

Die Fixierungseinheit, die Absandungseinheit, die Flankensprüheinheit, die Abdeckbandeinheit und das Fugenflankenreinigungsmodul werden zusammengefasst auch als die Behandlungsmodule bezeichnet.

In einer anderen vorteilhaften Weiterbildung weist die Fräsfugenbehandlungsvorrichtung ein Wegmessmodul auf. Das Wegmessmodul ist ausgebildet zur Erfassung der Länge der behandelten Fräsfuge, so dass hier in Echtzeit eine Information zum Arbeitsfortschritt sowie zugleich die Datenbasis für ein Aufmaß als mögliche Grundlage für eine Abrechnung vorliegt. Vorteilhaft können so aufwändige Maßnahmen für die Aufmaßerstellung, die unter Umständen nachträgliche temporäre Straßensperrungen erfordern, entfallen.

In einer einfachen Ausführungsvariante kann das Wegmessmodul als ein mitlaufendes Messrad oder ein Rolltacho ausgebildet sein. Vorzugsweise ist das Wegmessmodul jedoch in die Fahreinheit integriert, so dass auf der Grundlage des bekannten Radumfangs und mittels der Umdrehungen der Laufräder der Fahreinheit die Wegerfassung erfolgt. Besonders bevorzugt werden die gemessenen Wegdaten in elektronischer Form erfasst und ausgegeben, so dass diese einerseits unmittelbar dem Bediener angezeigt und andererseits in einem Datenspeicher für eine spätere Auswertung abgelegt werden können. Vorzugsweise können die Wegdaten auch mit erfassten Daten zu Betriebszuständen der Behandlungsmodule wie beispielsweise Anzahl der Fixierkörper pro Strecke, Sandvolumen pro Strecke oder aufgebrachter Haftkleber pro Strecke verknüpft werden.

Gemäß einer besonders bevorzugten Variante ist die Wegmessung mit einem GPS-Modul gekoppelt, so dass die gemessenen Wegdaten mit den GPS-Daten verknüpft werden können und so eine manipulationsgeschützte Dokumentation ermöglichen.

In einer Weiterentwicklung kann mit einem Bildkameramodul zur Erhöhung der Dokumentationssicherheit bei besonders sensiblen Anwendungsfällen auch eine simultane optische Erfassung der Fräsfuge nach einem oder mehreren Behandlungsschritten, vorzugsweise vor dem Auflegen des Abdeckbandes erfolgen. Das Bildkameramodul weist eine elektronische Bildkamera auf die Bilddaten bereitstellt, die sequentiell oder als laufende Bilder den erfassten Wegdaten zugeordnet werden können.

Die Erfindung wird als Ausführungsbeispiel anhand von
Fig. 1 schematische Schrägbilddarstellung der Fräsfugenbehandlungsvorrichtung.
Fig. 2 schematische Schnittdarstellung einer behandelten Fräsfuge
näher erläutert.

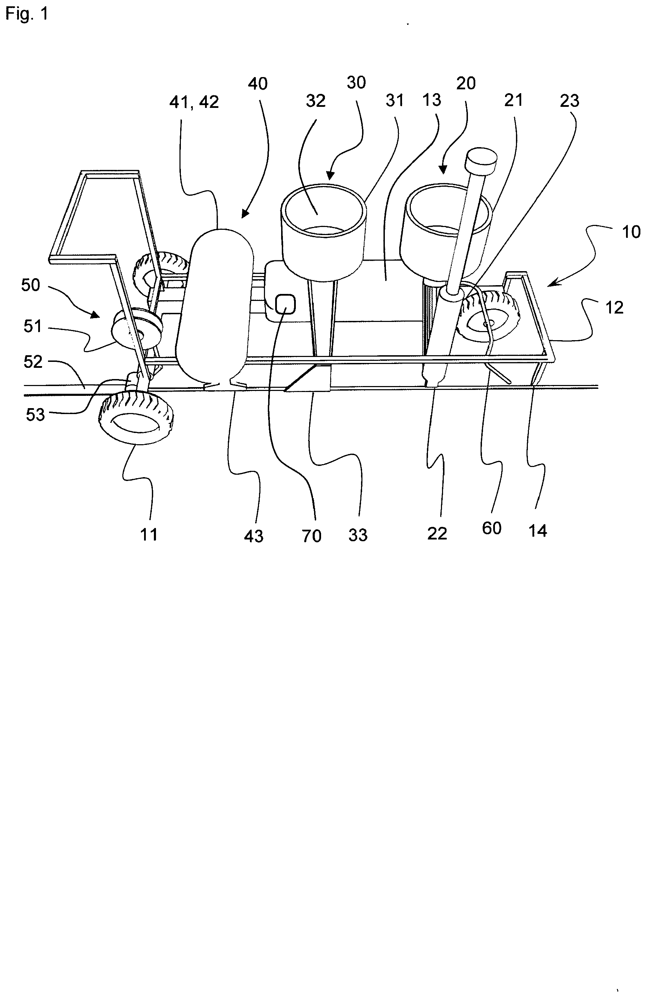

Die Figur 1 zeigt in einer schematischen Schrägbilddarstellung die Fräsfugenbehandlungsvorrichtung in einem Ausführungsbeispiel mit fünf Behandlungsmodulen.

Die Fräsfugenbehandlungsvorrichtung dient dazu, Fräsfugen, die auf einer Verkehrsfläche zum Verlegen von Signal- oder Sensorleitungen eingebracht sind, für das Verschließen vorzubereiten und hierbei die Leitungen zu fixieren und abschließend die Fräsfuge vor Umwelteinflüssen zu schützen.

Die Fräsfugenbehandlungsvorrichtung besteht nach ihrem Grundaufbau aus einer Basisplattform 10 auf der alle Behandlungsmodule 20, 30, 40, 50, 60 angeordnet sind.

Damit die Vorrichtung bewegbar ist und entlang der Fräsfuge fahrend geführt werden kann, weist die Basisplattform 10 eine Fahreinheit 11 auf. In diesem Ausführungsbeispiel ist die Fahreinheit 11 mit drei Rädern ausgebildet, wobei mindestens ein Rad durch einen Antrieb 13 angetrieben wird. Der Antrieb ist im Ausführungsbeispiel elektrisch ausgeführt. Eine Batterie dient als Stromversorgung. In die Fahreinheit ist ein Wegmessmodul 70 integriert, mit dem die gefahrene Strecke erfasst werden kann. Die Basisplattform 10 ist zudem heckseitig mit einem Griffgestell versehen, an dem ein Bediener die Vorrichtung führen und lenken kann. Dort sind auch die Bedienelemente (zur Vereinfachung nicht dargestellt) zur Steuerung der Behandlungsmodule angeordnet. In Fahrtrichtung gesehen an der Front der Fräsfugenbehandlungsvorrichtung ist ein Leitkörper 14 in Form eines Führungsdorns angebracht, der in der Fräsfuge positioniert wird, um die Bearbeitungsspur der Vorrichtung einzuhalten.

Darauf folgt bei bestimmungsgemäßer Fahrtrichtung das Fugenflankenreinigungsmodul 60, ausgebildet als Luftausblasdüse, um die Fräsfuge von losen Verschmutzungen zu reinigen.

In der Bearbeitungslinie weitergesehen folgt die Fixierungseinheit 20, durch die elastische Fixierkörper 22, die im Fixierkörperbehälter 21 bevorratet werden und mittels Fixierkörperhandlingsmodul 23 in die Fräsfuge eingepresst werden. Das Fixierkörperhandlingsmodul 23 besteht dabei aus Leitelementen, die den Fixierkörper 22 zur Fräsfuge führen und dann mittels eines angetriebenen Stempels eingepresst werden. Sind die Fixierkörper 22 in der Fräsfuge fixiert, kann bei bestimmungsgemäßer Verwendung das Absanden des verbleibenden Fugenspaltraums erfolgen.

Hierfür folgt in der Bearbeitungslinie die Absandungseinheit 30, die den Sandvorratsbehälter 31 mit dem Sand 32 und die Dosiereinheit 33 aufweist. Bei deren Betrieb rieselt aus dem Sandvorratsbehälter 31 der Sand 32 über die Dosiereinheit 33 in die Fräsfuge. Dabei lässt sich die Dosiereinheit 33 sowohl in der abgegebenen Sandmenge als auch in der Ausbringungshöhe einstellen, sodass der Fugenspaltraum der Fräsfuge optimal gefüllt werden kann.

Darauffolgend ist auf der Basisplattform 10 die Flankensprüheinheit 40 montiert. Diese sprüht den oberen vertikalen Bereich der Fräsfuge mittels der Sprühdüse 43 mit Haftkleber 42 ein, der aus dem Haftklebervorratsbehälter 41 bereitgestellt wird. Der Haftkleber 42 erzeugt eine Haftbrücke für den späteren Verschluss der Fräsfugen mit Asphalt und kann zugleich zum Verkleben des Abdeckbandes 52 mit dem Fahrbahnbelag dienen.

Mit dem darauffolgenden Bearbeitungsmodul, der Abdeckbandeinheit 50, wird das Abdeckband 52 bereitgestellt. Bevorratet wird das Abdeckband 52 auf einer Rolle auf dem Abdeckbandrollenaufnehmer 51. Von dieser abgerollt und auf die Klebestelle aufgebracht wird es mittels der Bandaufageeinheit 53, die hier eine flexible Anpressrolle am Heck des Fugenflankenreinigungsmoduls aufweist.

Damit ist die Fuge fahrbahngleich und witterungsfest vorläufig verschlossen. Bei späteren Fugenverschluss mit einem bituminösen Stoff wie Asphalt wird das Abdeckband abgezogen oder aufgeschnitten und es steht eine vorbereitete Fräsfuge mit haftfähigen Fugenflanken bereit.

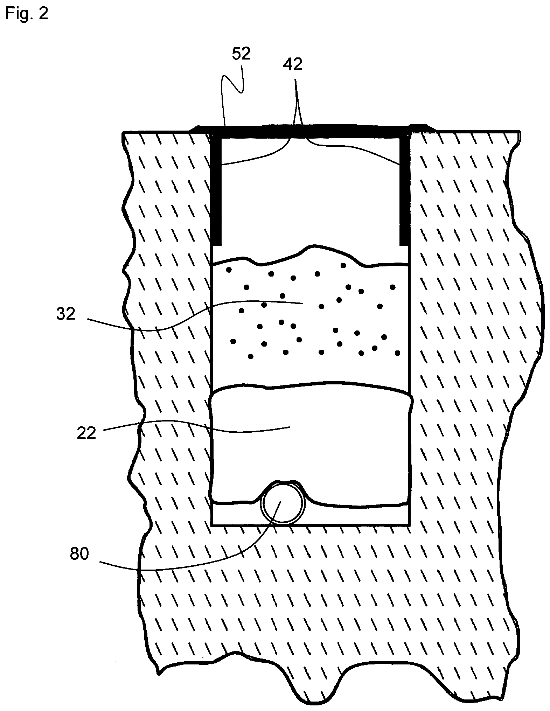

Die Figur 2 zeigt in einer schematischen Schnittdarstellung den Aufbau einer provisorisch mit dem Abdeckband 52 verschlossenen Fräsfuge.

Am Grund der Fräsfuge ist die Sensor-/Signalleitung 80, die nicht Bestandteil der erfindungsgemäßen Vorrichtung ist, angeordnet. Diese wird von im Fugenverlauf in regelmäßigen Abständen angeordneten flexiblen Fixierkörpers 22 in ihrer Position fixiert. Danach wird der Bereich bis zur gewünschten Höhe mit Sand 32 verfüllt. Die oberen vertikalen Bereiche der Fräsfuge bis Fahrbahnoberfläche werden mit Haftkleber 42 besprüht. Dort haftet nach einem späteren Fugenverschluss der Verfüllasphalt an. Anschließend verschließt das Abdeckband 52 vorläufig witterungsfest und fahrbahneben die Fräsfuge.

### Verwendete Bezugszeichen

- 10: Basisplattform
- 11: Fahreinheit
- 12: Grundgestell
- 13: Antrieb
- 20: Fixierungseinheit
- 21: Fixierkörperbehälter
- 22: Fixierkörper
- 23: Fixierkörperhandlingsmodul
- 30: Absandungseinheit
- 31: Sandvorratsbehälter
- 32: Sand
- 33: Dosiereinheit
- 40: Flankensprüheinheit
- 41: Haftklebervorratsbehälter
- 42: Haftkleber
- 43: Sprühdüse
- 50: Abdeckbandeinheit
- 51: Abdeckbandrollenaufnehmer
- 52: Abdeckband
- 53: Bandauflageeinheit
- 60: Fräsfugenreinigungsmodul
- 70: Wegmessmodul
- 80: Signal-/Sensorleitung

## Patentansprüche

1. Fräsfugenbehandlungsvorrichtung,
aufweisend eine handgeführte verfahrbare Basisplattform (10),
eine Absandungseinheit (30) und eine Sprüheinheit (40),
wobei die Basisplattform (10) eine Fahreinheit (11) und ein Grundgestell (12) aufweist,
wobei die Absandungseinheit (30) zum Erzeugen eines die Leitung überdeckendes Sandbetts in der Fräsfuge ausgebildet ist und einen Sandvorratsbehälter (31), der zur Aufnahme eines Sandes (32) ausgebildet ist, sowie eine Ausgabe- und Dosiereinheit (33), die zum Einbringen des Sandes (32) in die Fräsfuge ausgebildet ist, aufweist,
**dadurch gekennzeichnet, dass**
die Sprüheinheit (40) eine Flankensprüheinheit (40) ist und die Flankensprüheinheit (40) zu einer Benetzung einer Fugenflanke der Fräsfuge mit einer Haftkleberschicht ausgebildet ist und einen Haftklebervorratsbehälter (41), der zur Aufnahme eines Haftklebers (42) ausgebildet ist, sowie eine Sprühdüse (43), die zum Aufsprühen des Haftklebers (42) auf die Fugenflanke ausgebildet ist, aufweist, wobei die Fräsfugenbehandlungsvorrichtung eine Fixierungseinheit (20) aufweist, wobei die Fixierungseinheit (20) zum Fixieren einer Leitung in einer Fräsfuge ausgebildet ist und einen Fixierkörperbehälter (21), der zur Aufnahme von Fixierkörpern (22) ausgebildet ist, sowie ein Fixierkörperhandlingsmodul (23), das zum Einpressen der Fixierkörper (22) in eine Fräsfuge ausgebildet ist, aufweist

2. Fräsfugenbehandlungsvorrichtung nach Anspruch 1,
**dadurch gekennzeichnet,**
**dass** diese eine Abdeckbandeinheit (50) aufweist die ausgebildet zum Auflegen eines die Fräsfuge überdeckenden Abdeckbandes (52) ist, und dass die Abdeckbandeinheit (50)
einen Abdeckbandrollenaufnehmer (51)
und eine Abroll- und Bandauflegeeinheit (53), die zum Aufbringen des Abdeckbandes (52) auf einen Fräsfugenrand ausgebildet ist, aufweist.

3. Fräsfugenbehandlungsvorrichtung nach einem der vorhergehenden Ansprüche,
**dadurch gekennzeichnet,**
**dass** die Fahreinheit (11) einen Antrieb (13) aufweist, der für eine aktive Fahrbewegung der Fräsfugenbehandlungsvorrichtung ausgebildet ist.

4. Fräsfugenbehandlungsvorrichtung nach einem der vorhergehenden Ansprüche,
**dadurch gekennzeichnet,**
**dass** die Fahreinheit (11) ausgebildet ist, die Basisplattform (10) fugenverlauffolgend zu führen und einen Leitkörper (14) aufweist, der ausgebildet ist, in die Fräsfuge einzugreifen.

5. Fräsfugenbehandlungsvorrichtung nach einem der vorhergehenden Ansprüche,
**dadurch gekennzeichnet,**
**dass** diese ein Fugenflankenreinigungsmodul (60) aufweist, das zu einer Reinigung der Fugenflanke vor der Benetzung der Fugenflanke mit der Haftkleberschicht ausgebildet ist.

6. Fräsfugenbehandlungsvorrichtung nach einem der vorhergehenden Ansprüche,
**dadurch gekennzeichnet,**
**dass** diese ein Wegmessmodul (70) aufweist, das zu einer Erfassung der Länge der behandelten Fräsfuge ausgebildet ist.

7. Fräsfugenbehandlungsvorrichtung nach einem der vorhergehenden Ansprüche,
**dadurch gekennzeichnet,**
**dass** diese ein GPS-Modul oder eine Bildkameraeinheit aufweist.

## Claims

1. A milled groove treatment device,
comprising a hand-guided manoeuvrable base platform (10), a sanding unit (30) and a spraying unit (40),
wherein the base platform (10) comprises a drive unit (11) and a base frame (12),
wherein the sanding unit (30) is designed to create a sand bed covering a cable within the milled groove and comprises a sand storage container (31), which is designed to be filled with sand (32), as well as a dispensing and metering unit (33), which is designed to fill the sand (32) into the milled groove,
**characterized in**
**that** the spraying unit (40) is a flank spraying unit (40) and the flank spraying unit (40) is designed to coat a groove flank of the milled groove with an adhesive layer and comprises an adhesive reservoir (41), which is designed to receive an adhesive (42), and a spray nozzle (43), which is designed to spray the adhesive (42) onto the groove flank, wherein the milled groove treatment device comprises a fixing unit (20), wherein the fixing unit (20) is designed to fix the cable in a milled groove and comprises a fixing body container (21), which is designed to receive fixing bodies (22), and a fixing body handling module (23), which is designed to press the fixing bodies (22) into a milled groove.

2. The milled groove treatment device according to claim 1,
**characterized in**
**that** it comprises a covering tape unit (50) that is designed to place a covering tape (52) over the milled groove to cover it, and that the covering tape unit (50) comprises a covering tape roll receiving unit (51) and an unwinding and tape placing unit (53) designed to place the covering tape (52) onto an edge of the milled groove.

3. The milled groove treatment device according to one of the previous claims, **characterized in**
**that** the drive unit (11) comprises a drive (13), which is designed for an active travel of the milled groove treatment device.

4. The milled groove treatment device according to one of the previous claims, **characterized in**
**that** the drive unit (11) is designed to guide the base platform (10) along the course of the groove and comprises a guide member (14), which is designed to engage in the milled groove.

5. The milled groove treatment device according to one of the previous claims, **characterized in**
**that** it comprises a groove flank cleaning module (60) that is designed to clean the groove flank prior to the groove flank being coated with the adhesive layer.

6. The milled groove treatment device according to one of the previous claims, **characterized in**
**that** it comprises a distance measurement module (70) that is designed to measure the length of the treated milled groove.

7. The milled groove treatment device according to one of the previous claims, **characterized in**
**that** it comprises a GPS module or an image camera unit.

## Revendications

1. Dispositif de traitement des joints de fraisage,
présentant une plate-forme de base mobile à guidage manuel (10), une unité de sablage (30) et une unité de pulvérisation,
où la plate-forme de base (10) comprend un module de déplacement (11) et un châssis de base (12),
où l'unité de sablage (30) est conçue pour former un lit de sable recouvrant la conduite dans le joint de fraisage et comportant un réservoir de sable (31), conçu pour contenir du sable (32), ainsi qu'une unité de distribution et de dosage (33) conçue pour introduire le sable (32) dans le joint de fraisage, **caractérisé en ce que** l'unité de pulvérisation (40) est une unité de pulvérisation de flancs (40) et **en ce que** l'unité de pulvérisation de flancs (40) est conçue pour enduire un flanc du joint de fraisage d'une couche d'adhésif sensible à la pression et comprend un réservoir d'adhésif sensible à la pression (41), conçu pour recevoir un adhésif (42), ainsi qu'une buse de pulvérisation (43) conçue pour pulvériser l'adhésif (42) sur le flanc du joint, le dispositif de traitement des joints de fraisage comportant une unité de fixation (20), laquelle est conçue pour fixer une conduite dans un joint de fraisage et comprend un réservoir de corps de fixation (21) conçu pour recevoir des éléments de fixation (22), ainsi qu'un module de manutention des éléments de fixation (23) conçu pour enfoncer les éléments de fixation (22) dans un joint de fraisage.

2. Dispositif de traitement des joints de fraisage selon la revendication 1 est **caractérisé en ce**
**qu'**il comporte une unité de bande de recouvrement (50) conçue pour poser une bande de recouvrement (52) recouvrant le joint de fraisage, et que l'unité de bande de recouvrement (50) comporte un support de rouleau de bande de recouvrement (51) et une unité pour dérouler et appliquer la bande (53), conçue pour appliquer la bande de recouvrement (52) sur un bord du joint de fraisage.

3. Dispositif de traitement des joints de fraisage suivant une des revendications précédentes
est **caractérisé en ce**
**que** le module de déplacement (11) comporte un entraînement (13) conçu pour assurer un déplacement actif du dispositif de traitement des joints de fraisage.

4. Dispositif de traitement des joints de fraisage suivant une des revendications précédentes
est **caractérisé en ce**
**que** le module de déplacement (11) est conçue pour guider la plate-forme de base (10) en suivant le tracé du joint et comporte un corps de guidage (14) conçu pour s'engager dans le joint de fraisage.

5. Dispositif de traitement des joints de fraisage suivant une des revendications précédentes
est **caractérisé en ce**
**qu'**il comporte un module de nettoyage des flancs de joint (60), conçu pour nettoyer le flanc de joint avant que celui-ci ne soit enduit de la couche d'adhésif.

6. Dispositif de traitement des joints de fraisage suivant une des revendications précédentes
est **caractérisé en ce**
**qu'**il comporte un module de mesure de déplacement (70) conçu pour détecter la longueur du joint de fraisage traité.

7. Dispositif de traitement des joints de fraisage suivant une des revendications précédentes
est **caractérisé en ce**
**qu'**il comporte un module GPS ou une unité de caméra.
